# EUROPEAN PATENT SPECIFICATION

(11) **EP 2 345 222 B1**
(45) Date of publication and mention of the grant of the patent: **24.08.2016**
(21) Application number: 08875169.8
(22) Date of filing: 10.10.2008
(51) Int. Cl.: H04L 29/06

(54) **LAWFUL AUTHORITIES WARRANT MANAGEMENT**
VOLLMACHTVERWALTUNG RECHTLICHER AUTORITÄTEN
GESTION DE MANDAT D'AUTORITÉS LÉGALES

(43) Date of publication of application: 20.07.2011
(73) Proprietor: Telefonaktiebolaget LM Ericsson (publ), 164 83 Stockholm (SE)
(72) Inventor: IMBIMBO, Amedeo, I-80023 Caivano (IT); CARNEVALE, Giuseppe, I-80128 Napoli (IT)
(74) Representative: Modiano, Micaela Nadia
(86) International application number: PCT/EP2008/063621
(87) International publication number: WO 2010/040413

(56) References cited:
- WO-A-2007/097667
- DE-A1-102005 004 612
- US-A- 5 991 406
- "Universal Mobile Telecommunications System (UMTS); Lawful interception requirements (3GPP TS 33.106 version 7.0.1 Release 7); ETSI TS 133 106" ETSI STANDARDS, LIS, SOPHIA ANTIPOLIS CEDEX, FRANCE, vol. 3-SA3, no. V7.0.1, 1 January 2006 (2006-01-01), XP014033960 ISSN: 0000-0001

## Description

### Technical Field

The present invention relates to lawful interception and data retention systems, in particular to systems and method for preventing illegal interception or illegal data requests.

### Background

In many countries operators and Internet service providers are today obliged by legal requirements to provide stored traffic data generated from public telecommunications and Internet services for the purpose of detection, investigation and prosecution of crime and criminal offences, including terrorism.

There are also initiatives within the European Union (EU) to regulate the legal basis for data retention. The EU Parliament adopted a set of amendments and by that approved the Council's proposed directive on data retention (Directive 2006/24/EC). In this directive, initial requirements and how an extension of the directive will be handled are described. Consequently, an essential part of operator's effort to comply with current legislation is to secure that processes and tools may be adapted to handle an expansion of the scope for data retention.

Technical specification ETSI DTS/LI-00039 gives guidance for the delivery and associated issues of retained data of telecommunications and subscribers. In particular, ETSI DTS/LI-00039 provides a set of requirements relating to Handover Interfaces for the retained traffic data and subscriber data by law enforcement and other authorised requesting authorities. The requirements are to support implementation of Directive 2006/24/EC of the European Parliament and of the Council of 15 March 2006 regarding the retention of data.

Technical Specification ETSI DTS/LI-00033 contains handover requirements and a handover specification for the data that is identified in EU Directive 2006/24/EC on retained data.

DE 10 2005 004612 discloses that an authorisation of LEA is checked using certificate, thus illegal interception is prevented.

Usually there is a public official, for instance a judge, who authorises investigation on some persons, allowing to activate lawful interception on their communications or to query on data retention databases. The authorisation paper is named "warrant".

According to the received warrant the lawful enforcement agency may set targets of interception and/or query the data retention database.

In general, in LI subsystems that allow to activate the interceptions (such as Ericsson Lawful Intercept Mediation System, LI-IMS), all commands are traced, so it is possible for a supervising authority to verify if the targets have been set without a warrant, or in a way not consistent with the original authorisation, and consequently remove them.

In a similar way, all commands given to a data retention system such as Ericsson Automatic Data Retention Solution (ADRS) to order queries on some target users are traced, so it is possible for the supervisor to verify if some query has been ordered with no warrant, or in a way not consistent with the original authorisation.

A problem in the current lawful interception and data retention solutions arises from the fact that an unauthorised use of the systems, that is an interception or a query on retained data performed without a granted warrant, may be detected only after the unauthorised use has been performed.

In other words a command to set a target of interception or a query on some target users may be performed even if a warrant has not been granted, and these unauthorised activities may go on until a supervisor detects the situation.

Another similar problem stems from the fact that in some countries it may be forbidden to intercept or to query the data retention database in respect of people having public official roles. However there is no automatic mechanism that may prevent lawful enforcement agencies to intercept or query retained data relating to such persons.

### Summary

The aim of the present invention is to provide an enhanced warrant management system that overcomes the above mentioned drawbacks.

The present invention is defined by the subject matter of the independent claim 1. Preferred embodiments are defined by the dependent claims.

In the disclosure, the expression "retention" of data generally indicates a query directed to retrieve retained data.

### Brief description of the drawings

Further characteristics and advantages of the invention will become better apparent from the detailed description of particular but not exclusive embodiments, illustrated by way of non-limiting examples in the accompanying drawings, wherein:
Figure 1 is an arrangement of a service provided with Data Retention (DR) capabilities, enhanced with an electronic warrant module according to the invention;
Figure 2 is a known arrangement of a Lawful Interception system enhanced with an electronic warrant module;
Figure 3 is a table representing the record format of the electronic warrant;
Figure 4 is a table representing the record format of an electronic warrant containing a list of immune users;
Figure 5 is a flow diagram showing a method of setting an electronic warrant in a lawful interception system according to the present invention;
Figure 6 is a flow diagram showing a method of handling a target set without an electronic warrant in a lawful interception system according to the present invention;
Figure 7 is a flow diagram showing a method of setting an electronic warrant containing a list of immune users in a lawful interception system according to the present invention;
Figure 8 is a flow diagram showing another method of setting an electronic warrant containing a list of immune users in a lawful interception system according to the present invention;
Figure 9 is a flow diagram showing a method of setting an electronic warrant in a data retention system according to the present invention;
Figure 10 is a flow diagram showing a method of setting an electronic warrant containing a list of immune users in a data retention system according to the present invention;
Figure 11 is a flow diagram showing another method of setting an electronic warrant containing a list of immune users in a data retention system according to the present invention.

It is noted that the term warrant is here used to indicate either a court order or a document containing target user information setting exception conditions on data interception and access to retained data, such as lists of immune target users.

### Detailed description

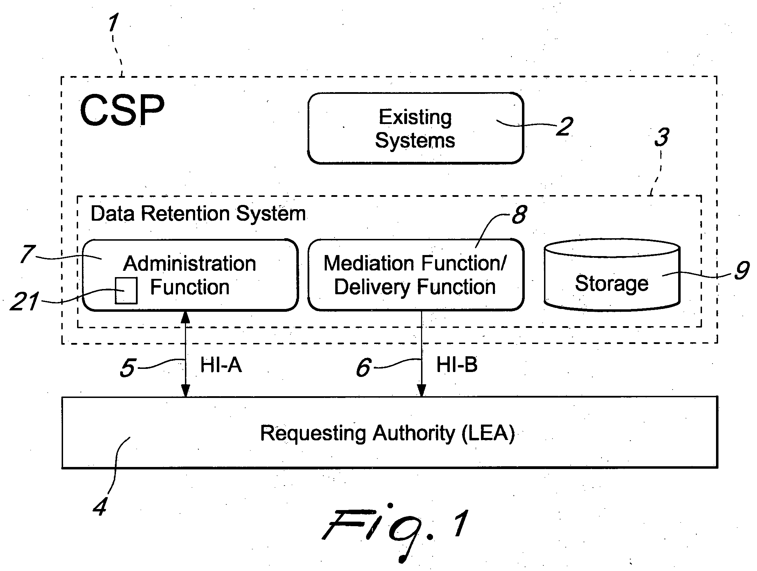

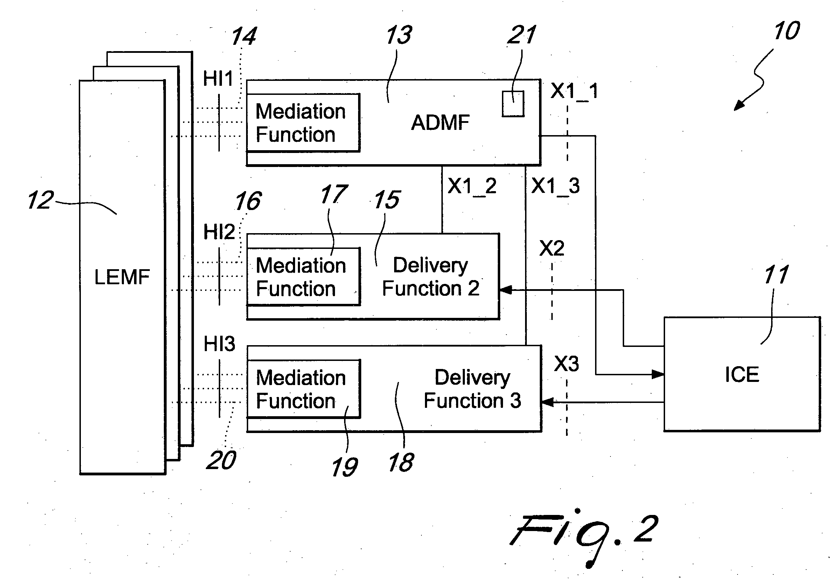

Figures 1 and 2 show a data retention system and a lawful interception system.

Particularly, figure 1 depicts an arrangement for retaining data in a Communication Service Provider 1 (CSP). Specifically, the CSP 1, which may incorporate existing communication systems 2, is provided with a Data Retention System (DRS) 3 for exchanging retained data relating information with a Requesting Authority 4, which may be a Law Enforcement Agency (LEA).

The data exchanged between the CSP 1 and the Requesting Authority 4 comprises requests from the Requesting Authority 4, corresponding responses from the DRS and other DR information, such as results of the requests and acknowledgements of receipt. The interfaces through which the CSP and DRS exchange the above data with the Requesting Authority are denoted as Handover Interfaces.

The generic Handover Interface adopts a two-port structure in which administrative request/response information and Retained Data Information are logically separated. In particular, a first Handover Interface port HI-A 5 is configured to transport various kinds of administrative, request and response information from/to the Requesting Authority 4 and an organization at the CSP 1 that is responsible for Retained Data matters, identified by an Administration Function 7.

A second Handover Interface HI-B 6 is configured to transport the retained data information stored in a repository 9 from the CSP 1 to the Requesting Authority 4. The individual retained data parameters have to be sent to the Requesting Authority 4 at least once, if available. To this aim, a Mediation/Delivery function 8 may be provided, for retrieving the retained data from the memory means 9 and forward such data to the Requesting Authority 4 in a suitable format through the HI-B 6.

A Lawful Interception (LI) system for accessing communications related data is depicted in figure 2. The standard architecture 10 comprises an Intercepting Control Element (ICE) 11 providing the user equipment of the target user with an access to the telecommunications network. An ICE may be, for instance, a 3G Mobile service Switching Center (MSC) Server, a 3G Gateway MSC Server, a Serving GPRS Support Node (SGSN), or a Gateway GSN (GGSN).

The architecture 10 further comprises one or more Law Enforcement Monitoring Facilities (LEMFs) 12 through which respective LEAs receive interception information.

An Administration Function (ADMF) entity 13 may be further configured for sending the target identity and LI authorisation data from the LEAs to the ICE. The ADMF 13 interfaces through a first Handover Interface 14 (HI1) with all the LEAs that may require interception in the intercepting network, keeps the intercept activities of individual LEAs separate and interfaces to the intercepting network. The ADMF 13 may also be used to hide from the ICE 11 that there might be multiple activations by different LEAs on the same target. The ADMF 13 may be partitioned to ensure separation of the provisioning data from different agencies.

Every physical ICE 11 may be linked to the ADMF by means of its own X1_1 interface. Consequently, every single ICE performs interception, i.e. activation, deactivation, interrogation as well as invocation, independently from other ICEs.

In order to deliver the intercepted information to the LEAs, two Delivery Functions (DF) entities are provided, each exchanging respective portions of information with the ADMF 13 (through X1_2 and X1_3 interfaces) and the LEMF 12.

In particular, a DF2 entity 15 may be configured to receive Intercept Related Information (IRI) from the ICE, through an X2 interface, and to convert and distribute the IRI to the relevant LEAs via a second Handover Interface 16 (HI2) by means of a Mediation Function (MF) 17.

The IRI is a collection of information or data associated with telecommunication services involving the target identity, such as call associated information or data, e.g. unsuccessful call attempts, service associated information or data, e.g. service profile management by subscriber, and location information.

A DF3 entity 18, instead, may be configured to receive Content of Communications (CC) information from the ICE 11 through an X3 interface, and to convert and distribute such information to the relevant LEA through an MF 19 and a third Handover Interface (HI3).

The CC is information different from the IRI, which is exchanged between two or more users of a telecommunications service and, more in general, includes information which may, as part of some telecommunications service, be stored by one user for subsequent retrieval by another user.

In both arrangements of Figure 1 and 2, electronic warrants 21 according to the inventions are loaded in an Administration Function.

The electronic warrant may be in any electronic format, including standardised electronic formats. It may consist of a file, coded by using any commonly used format, containing the scope of the warrant, in terms of targets of the investigations.

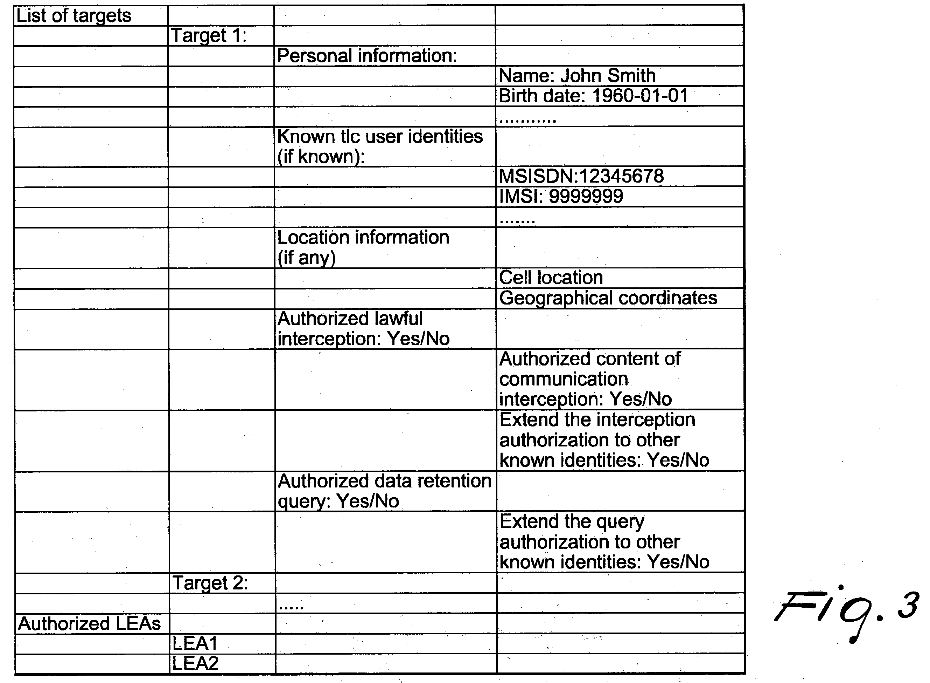

An example of a warrant record is shown in the table of Figure 3.

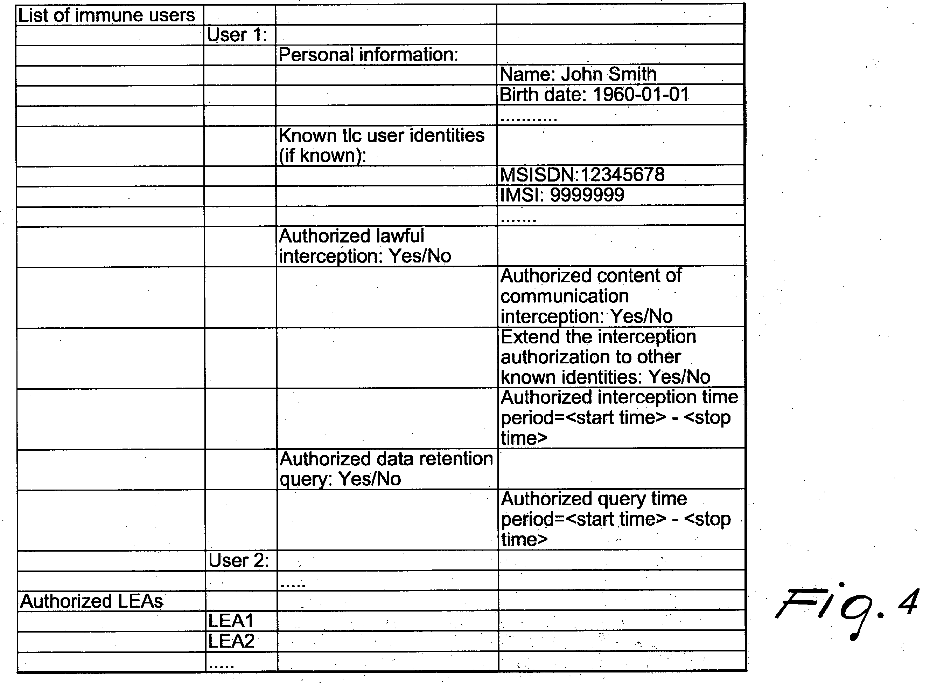

This record format may be extended to specify a blacklist of users, for whom it may not be possible to order interception and/or data retention queries, namely "immune users". An example of a format of the record is shown in the table of Figure 4.

This record may be digitally signed in order for authentication and to ensure its integrity. The format may be unified for the scopes of lawful interception, data retention and for other investigation tools. The receiving system, e.g. a data retention system or a lawful interception management system, may be able to verify it by using a public key. Therefore, users having the rights to set warrants may be configured with its secure certificate.

In case blacklist records are exchanged using an electronic or non electronic interface, or if, in general, they could be subjected to processing by operator's personnel, the user identities may be sent in encrypted format. In this way, user identities would not be known to users that do not have access to the related encryption key.

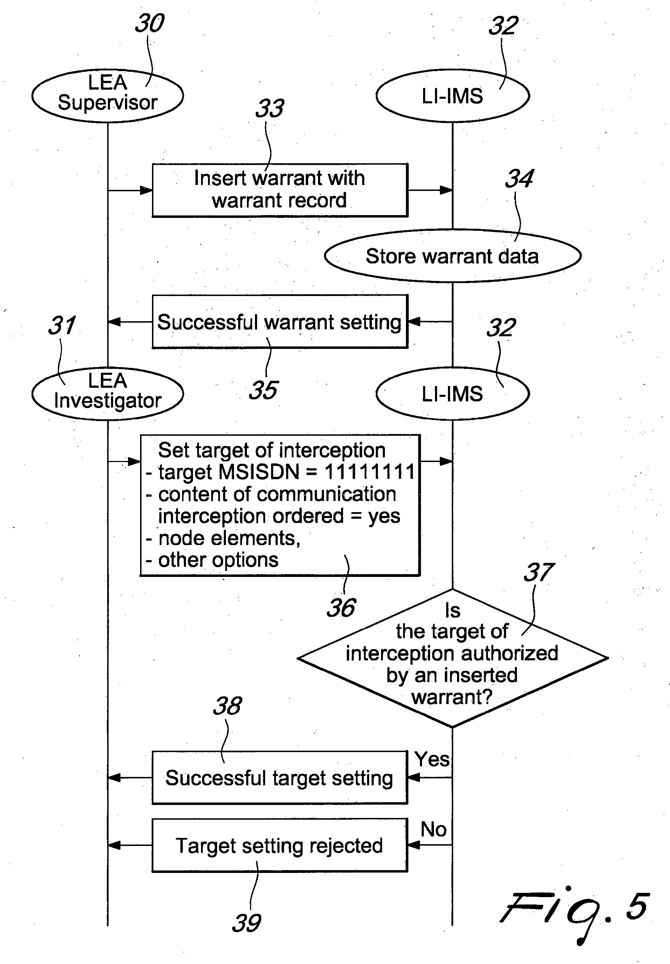

Preferred embodiments of the invention are now discussed with references to figures 5 to 11.

Figure 5 shows a first scenario that depicts the flow of information between the LEA and the lawful interception system.

Two roles are assigned to different users at the LEA side: users with the LEA supervisor role (30) are enabled to manage (insert, modify, view, delete) warrants, and users with the LEA investigator role (31) are enabled to manage target of interceptions.

At step 33 a LEA Supervisor 30 communicates with the LI-IMS 32 by sending a warrant containing a warrant record in the form described in Figure 3. At step 34 the LI-IMS stores the warrant data, and at step 35 sends a message to the LEA indicating successful warrant setting. At a subsequent time, a LEA investigator 31 sets a target for interception at step 36. At step 37 the LI-IMS checks if the target of interception is authorised by a warrant. Checks on the set target against the warrant may comprise checking that the LEA to which the investigator belongs is authorised, for instance that is included in the Authorised LEA's list in the warrant record, checking that the specified identities are authorised, checking that other options are authorised, for instance content of communication interception, and checking that the time period is authorised by the warrant.

If the outcome of the check is positive, at step 38 the LI-IMS sends a message to LEA indicating successful setting of the target; otherwise at step 39 the LI-IMS sends a message to LEA indicating the rejection of target setting.

The skilled in the art appreciates that there is no one-to-one relation between the warrant data and the target of interception. For example, if the LEA supervisor authorises by means of a warrant the interception on a user identified by a given MSISDN, and sets the warrant field "Extend the interception authorisation to other known identities" to "Yes", then a LEA investigator may obtain other identities of the same user (e.g. IMEI or IMSI) by the reports of interceptions, and is authorised to set those identities as target of interception even without a specific warrant.

In a similar way, if a warrant contains a field indicating that is possible to extend the interception authorisation to other identified users, then the investigator will be authorised to set as target of interception all users that communicate with the user for which the warrant was inserted.

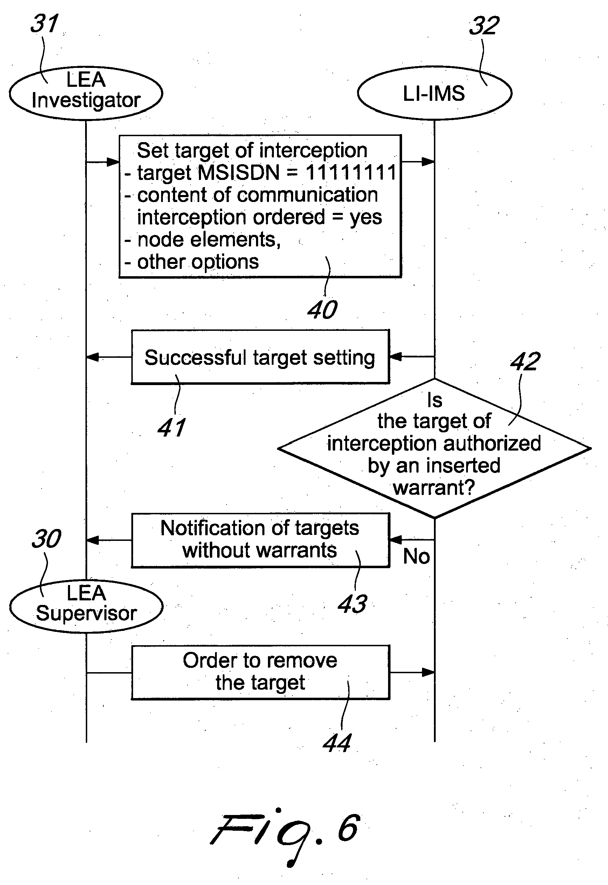

It is required to allow the setting of target of interception even when no warrant was inserted in advance. This scenario is depicted in figure 6. In this case a LEA investigator 31 at step 40 sets the target for interception; the LI-IMS 32 at step 41 acknowledges the setting by sending a message indicating successful target setting; after the target has been set, at step 42 the LI-IMS checks if the target is authorised by a warrant; if this is not the case, at step 43 the LI-IMS sends a notification to a LEA supervisor 30; the LEA supervisor may then decide to allow the continuation of the interception or, at step 44, to order the removal of the target of interception.

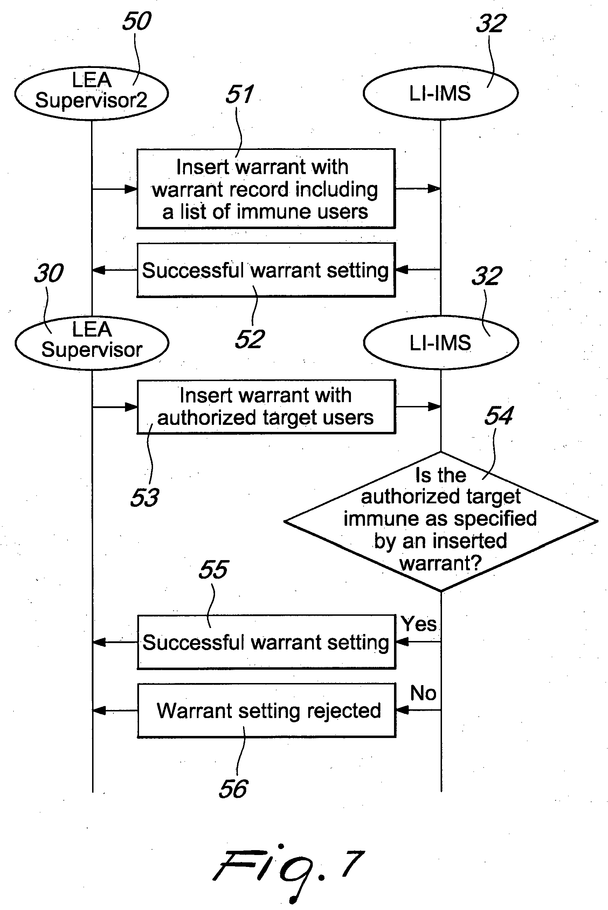

Figure 7 shows a possible embodiment of the flow between LEA and LI-IMS for handling warrants containing list of immune users, as discussed above. In this scenario two LEA supervisor roles are introduced; a standard LEA supervisor 30, who can manage normal warrants, and a LEA supervisor2 50, who is enabled to manage warrants specifying a list of immune users. At step 51 the LEA Supervisor2 50 communicates with the LI-IMS 32 by inserting a warrant containing a list of immune users. At step 52 the LI-IMS acknowledges the successful setting of the warrant. At step 53 LEA supervisor 30 communicates with the LI-IMS by inserting a warrant containing a list of target users; at step 54 the LI-IMS checks if the specified identities are immune, as specified by the warrant previously set by a supervisor2 user, and if the authorised LEAs specified in the target warrant are included in the list of LEAs contained in the warrant specifying the immune users; in fact in case of immune users only authorised LEAs are enabled to set the interception. If the target identities are not immune, or if they are immune but the list of LEAs is included in the authorised LEAs, at step 55 the warrant is successfully set, otherwise at step 56 the warrant setting is rejected.

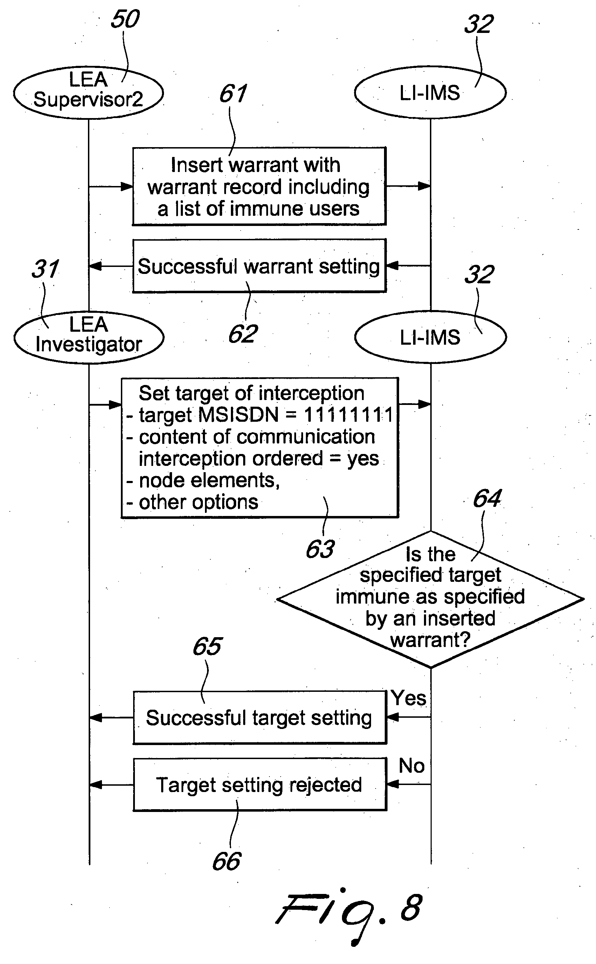

In order to prevent the illegal interception of immune users, the insertion of both the warrant with immune users and the warrant with targets of interception is not mandatory; in case only the warrant with immune users is inserted, a possible embodiment of the flow between LEA and LI-IMS is depicted in figure 8. At step 61 the LEA Supervisor2 50 communicates with the LI-IMS 32 by inserting a warrant containing a list of immune users. At step 62 the LI-IMS acknowledges the successful setting of the warrant.

At a subsequent time, a LEA investigator 31 sets a target for interception at step 63. At step 64 the LI-IMS checks if the target of interception belongs to a list of immune users as specified by a warrant: if the check is negative at step 65 the LI-IMS sends a message to LEA indicating successful setting of the target; otherwise at step 66 the LI-IMS sends a message to LEA indicating the rejection of target setting.

According to the invention, the communication between the LEA and the data retention system for the managing of warrants is performed in a way very similar to the one described above for the communication between the LEA and the lawful interception system.

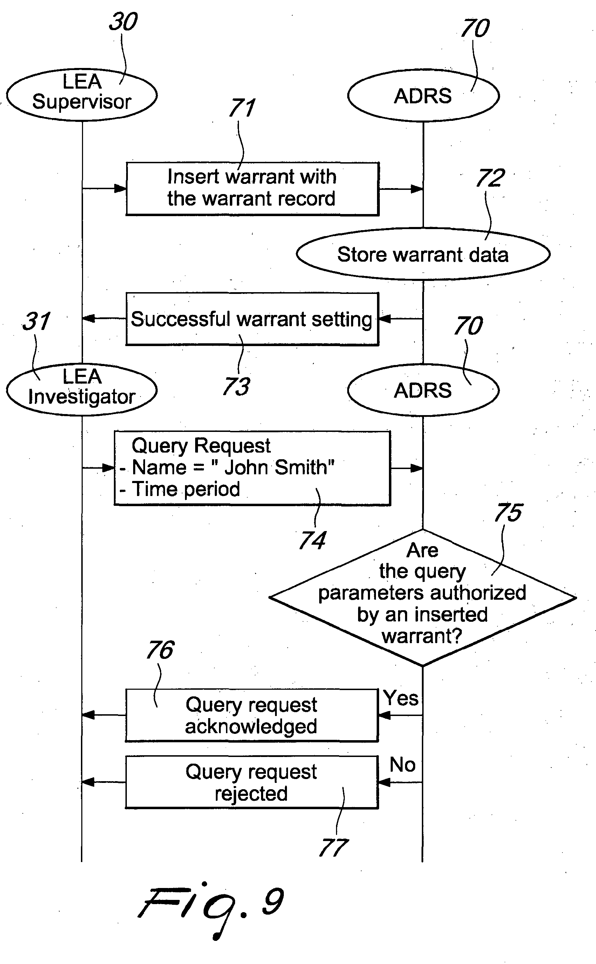

Figure 9 shows a scenario that depicts the flow of information between the LEA and the data retention system for setting a warrant according to the present invention.

Two roles are assigned to different users at the LEA side: users with the LEA supervisor role (30) are enabled to manage (insert, modify, view, delete) warrants, and users with the LEA investigator role (31) are enabled to query the data retention database.

At step 71 a LEA Supervisor 30 communicates with the ADRS 70 by sending a warrant containing a warrant record in the form of the one described in Figure 3. At step 72 the ADRS stores the warrant data, and at step 73 sends a message to the LEA indicating successful warrant setting. At a subsequent time, a LEA investigator 31 sends a query request at step 74. At step 75 the ADRS checks if the query parameters are authorised by a warrant: Checks on the query parameters against the warrant comprise: checking that the LEA to which the investigator belongs is authorised, that is included in the Authorised LEAs list in the warrant record, checking that the specified identities are authorised, and that the query time period is authorised by the warrant.

If the check is positive at step 76 the ADRS sends a message to LEA indicating successful acknowledgement of the query request; otherwise at step 77 the ADRS sends a message to LEA indicating the rejection of the query request.

Again, the skilled in the art appreciates that there is no one-to-one relation between the warrant data and the user identities specified in the query: for example, if the LEA supervisor authorises by means of a warrant the interception on a user identified by a given name, and sets the warrant field "Extend the query authorisation to other known identities" to "Yes", then a LEA investigator may order the query on the given name and obtain other identities of the same user, and is authorised to extend the query also on those identities even without a specific warrant..

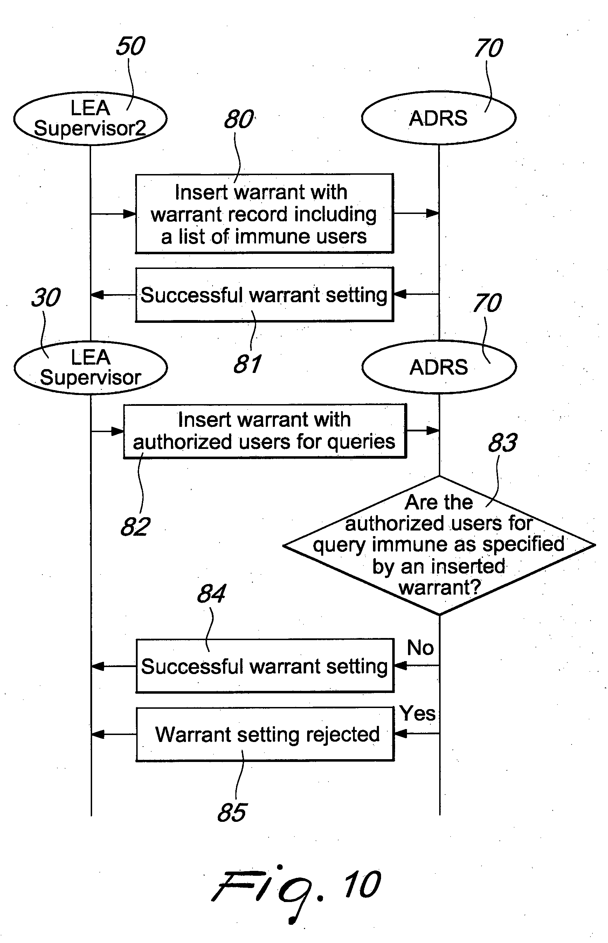

Figure 10 shows an illustrative embodiment of the flow between LEA and ADRS for handling warrants containing list of immune users, as discussed above. In this scenario two LEA supervisor roles are introduced; a standard LEA supervisor 30, who can manage normal warrants, and a LEA supervisor2 50, who is enabled to manage warrants specifying a list of immune users. At step 80 the LEA Supervisor2 50 communicates with the ADRS 70 by inserting warrant containing a list of immune users. At step 81 the ADRS acknowledges the successful setting of the warrant. At step 82 LEA supervisor 30 communicates with the ADRS by inserting a warrant containing a list of users authorised for queries; at step 83 the ADRS checks if the specified identities are immune, as specified by the warrant previously set by a supervisor2 user, and if the authorised LEAs specified in the target warrant are included in the list of LEAs contained in the warrant specifying the immune users; in fact in case of immune users only authorised LEAs are enabled to set queries. If the target identities are not immune, or if they are immune but the list of LEAs is included in the authorised LEAs, at step 84 the warrant is successfully set, otherwise at step 85 the warrant setting is rejected.

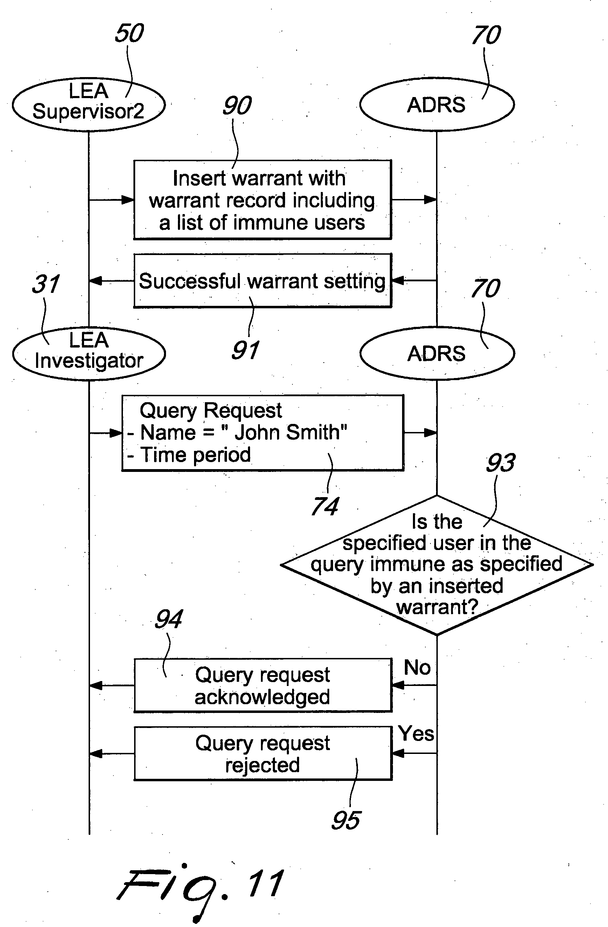

In order to prevent illegal querying on the ADRS of immune users, the insertion of both the warrant with immune users and the warrant with targets of interception may not be mandatory; in case only the warrant with immune users is inserted, a possible embodiment of the flow between LEA and ADRS is depicted in figure 11. At step 90 the LEA Supervisor2 50 communicates with the ADRS 70 by inserting a warrant containing a list of immune users. At step 91 the ADRS acknowledges the successful setting of the warrant.

At a subsequent time, a LEA investigator 31 sends a query request at step 92. At step 93 the ADRS checks if the user specified in the query belongs to a list of immune users as specified by a warrant: if the check is negative at step 94 the ADRS sends a message to LEA indicating acknowledgement of the query request; otherwise at step 95 the ADRS sends a message to LEA indicating the rejection of the query request.

It has been shown that the invention fully achieves the intended aim and objects, since it allows to block automatically any illegal usage of the lawful interception and of the data retention systems.

Besides the invention provides a simple and easy to implement solution, that does not require additional handover interfaces between the LEA and LI-IMS or ADRS.

Clearly, several modifications will be apparent to and can be readily made by the skilled in the art without departing from the scope of the present invention.

For example, in the embodiments described above the introduction of new messages on the handover interface ("Insert a warrant", "Successful warrant insertion", "Unsuccessful warrant insertion") has been shown. As a possible alternative, the warrant record may be included as additional data in the operation used to set the target of interception or to order a query.

Besides, several modification can be made in the management of immune users: for example, as an optional feature, the black-listing of targets could be applied by the LI-IMS system also on interceptions authorised on other users, if the black-listed target is involved in the communication. Possible actions the system may perform are completely deny the interception, aborting it when a black-listed user is involved, or block the flow of information (call content and/or number identification) related to the black-listed target, leaving the rest of the communication available to the agency.

Likewise, the black-listing of targets could be applied by the ADRS system also on queries authorised on other users, if the black-listed target is involved in the communication. In this case the system could filter out the related communications entirely or only the black-listed number from the query results.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for managing requests from Law Enforcement Agencies (30, 31), LEAs, for interception or retention of data relating to a target user, **characterized in that** two different LEA users (30, 31) are provided, said LEA users comprising a LEA supervisor (30) being enabled to insert, modify, view and delete electronic warrants, and a LEA investigator (31) being enabled to set a target user, the method comprising the following steps being carried out by a data retention system (70) or by a lawful interception management system (32) adapted to communicate with said LEA supervisor (30) and said LEA investigator (31):
- detecting (36, 40, 63, 74) a request of interception or retention on the target user from the LEA investigator (31);
- verifying (37, 42, 54, 75) whether an electronic warrant is activated with regard to said target user, the electronic warrant being activated if said data retention system (70) or said lawful interception management system (32) receives the electronic warrant from the LEA supervisor (30), stores (34) said electronic warrant and acknowledges (35) the setting of said electronic warrant to said LEA Supervisor (30);
- and in case an electronic warrant is not activated on the target user:
- issuing a notification (43) to the LEA supervisor (30);
- provisionally granting (41) said request;
- checking whether an electronic warrant has been entered by the LEA supervisor (30) in respect of the target user after said notification;
- granting (38, 55, 65, 76) said request in case the electronic warrant has been entered by the LEA supervisor (30) in respect of the target user;
- denying (39, 56, 66, 77) said request in case an electronic warrant has not been entered by the LEA supervisor (30) in respect of the target user.

2. The method according to claim 1 further comprising granting (35, 52, 62, 73, 81) said request in case the electronic warrant is activated on the target user.

3. The method according to claims 1 or 2, further comprising the step of:
- detecting additional identification information related to said target user, said additional identification information being at least one of: an identifier of a called party, including phone numbers and email address; an identifier of a third party, including phone numbers and email address;
- allowing retention or interception of data (34, 72) connected to said additional identification information.

4. The method of claims 1 or 2, wherein the electronic warrant comprises authorisation information defining a scope of retention or interception requests of data relating to the target user.

5. The method of claim 4, **characterised in that** said authorisation data comprises one or more of authorisation to intercept the target user; authorisation to extend interception to other known identities; authorisation to provisionally extend interception to other unknown identities; authorisation to access retained data of the target user; authorisation to extend access to retained data to other known identities; authorisation to provisionally extend access to retained data to other unknown identities; time intervals for interception of access to retained data.

6. The method of claim 5, **characterised in that** the electronic warrant is coded in a standard format.

7. The method of claim 6, **characterised in that** said standard format is in one of the formats selected among XML, BER and CSV.

## Patentansprüche

1. Ein Verfahren zum Verwalten von Anfragen von Vollstreckungsbehörden (30, 31) (Law Enforcement Agencies, LEAs) nach dem Abhören oder Aufbewahren von Daten mit Bezug auf einen Zielnutzer, **dadurch gekennzeichnet, dass** zwei verschiedene LEA-Nutzer (30, 31) bereitgestellt werden, wobei die LEA-Nutzer eine LEA-Aufsichtsperson (30) umfassen, die befähigt ist, elektronische Berechtigungen einzufügen, zu modifizieren, einzusehen und zu löschen, und einen LEA-Ermittler (31), der befähigt ist, einen Zielnutzer festzusetzen, wobei das Verfahren folgende Schritte umfasst, die von einem Datenaufbewahrungssystem (70) oder von einem Verwaltungssystem (32) für richterliches Abhören ausgeführt werden, ausgebildet, um mit der LEA-Aufsichtsperson (30) und dem LEA-Ermittler (31) zu kommunizieren:
- Erfassen (36, 40, 63, 74) einer Anfrage zum Abhören oder Aufbewahren bezüglich des Zielnutzers von der LEA-Aufsichtsperson (31);
- Überprüfen (37, 42, 54, 75), ob eine elektronische Berechtigung für den Zielnutzer aktiviert ist, wobei die elektronische Berechtigung aktiviert wird, wenn das Datenaufbewahrungssystem (70) oder das Verwaltungssystem (32) für richterliches Abhören die elektronische Berechtigung von der LEA-Aufsichtsperson (30) empfängt, die elektronische Berechtigung speichert (34) und das Einstellen der elektronischen Berechtigung gegenüber der LEA-Aufsichtsperson (30) bestätigt (35);
- und, falls keine elektronische Berechtigung für den Zielnutzer aktiviert ist:
- Ausstellen einer Benachrichtigung (43) an die LEA-Aufsichtsperson (30);
- vorläufiges Erteilen (41) der Ermächtigung;
- Überprüfen, ob nach der Benachrichtigung eine elektronische Berechtigung bezüglich des Zielnutzers von der LEA-Aufsichtsperson (30) eingegeben wurde;
- Erteilen (38, 55, 65, 76) der Ermächtigung, falls die elektronische Berechtigung durch die LEA-Aufsichtsperson (30) mit Bezug auf den Zielnutzer eingegeben wurde;
- Verweigern (39, 56, 66, 77) des Erteilens der Ermächtigung, falls keine elektronische Berechtigung von der LEA-Aufsichtsperson (30) mit Bezug auf den Zielnutzer eingegeben wurde.

2. Das Verfahren gemäß Anspruch 1, das weiter das Erteilen (35, 52, 62, 73, 81) der Ermächtigung umfasst, falls die elektronische Berechtigung für den Zielnutzer aktiviert ist.

3. Das Verfahren gemäß Anspruch 1 oder 2, das weiter folgenden Schritt umfasst:
- Erfassen zusätzlicher Identifikationsinformationen zu dem Zielnutzer, wobei die zusätzlichen Identifikationsinformationen mindestens eines von Folgendem sind: einer Kennung eines gerufenen Teilnehmers, einschließlich Telefonnummern und E-Mail-Adresse; einer Kennung eines dritten Teilnehmers, einschließlich Telefonnummern und E-Mail-Adresse;
- das Ermöglichen des Aufbewahrens oder Abhörens von Daten (34, 72), die mit den zusätzlichen Identifikationsinformationen zusammenhängen.

4. Das Verfahren gemäß Anspruch 1 oder 2, wobei die elektronische Berechtigung Berechtigungsinformationen umfasst, die einen Umfang der Anfragen zum Aufbewahren oder Abhören von Daten mit Bezug auf den Zielnutzer definieren.

5. Das Verfahren gemäß Anspruch 4, **dadurch gekennzeichnet, dass** die Berechtigungsdaten eines oder mehrere von Folgendem umfassen: Berechtigung, den Zielnutzer abzuhören; Berechtigung, das Abhören auf andere bekannte Identitäten auszudehnen; Berechtigung, das Abhören vorübergehend auf andere, unbekannte Identitäten auszudehnen; Berechtigung, auf aufbewahrte Daten des Zielnutzers zuzugreifen; Berechtigung, den Zugriff auf aufbewahrte Daten auf andere bekannte Identitäten auszudehnen; Berechtigung, den Zugriff auf aufbewahrte Daten vorübergehend auf andere, unbekannte Identitäten auszudehnen; Zeitintervalle für das Abhören von Zugriff auf aufbewahrte Daten.

6. Das Verfahren gemäß Anspruch 5, **dadurch gekennzeichnet, dass** die elektronische Berechtigung in einem Standardformat codiert ist.

7. Das Verfahren gemäß Anspruch 6, **dadurch gekennzeichnet, dass** das Standardformat eines der Formate ist, die gewählt sind aus XML, BER und CSV.

## Revendications

1. Procédé de gestion de demandes en provenance d'organismes d'application de la loi (30, 31), LEA, en vue de l'interception ou de la rétention de données connexes à un utilisateur cible, **caractérisé en ce que** deux utilisateurs d'organismes LEA différents (30, 31) sont fournis, lesdits utilisateurs d'organismes LEA comprenant un superviseur d'organismes LEA (30) autorisé à insérer, à modifier, à afficher et à supprimer des mandats électroniques, et un investigateur d'organismes LEA (31) autorisé à définir un utilisateur cible, le procédé comprenant les étapes ci-après, mises en oeuvre par un système de rétention de données (70) ou par un système de gestion d'interception légale (32) apte à communiquer avec ledit superviseur d'organismes LEA (30) et ledit investigateur d'organismes LEA (31), consistant à :
- détecter (36, 40, 63, 74) une demande d'interception ou de rétention sur l'utilisateur cible à partir de l'investigateur d'organismes LEA (31) ;
- vérifier (37, 42, 54, 75) si un mandat électronique est activé en ce qui concerne ledit utilisateur cible, le mandat électronique étant activé si ledit système de rétention de données (70) ou ledit système de gestion d'interception légale (32) reçoit le mandat électronique en provenance du superviseur d'organismes LEA (30), stocke (34) ledit mandat électronique, et reconnait (35) la définition dudit mandat électronique au niveau dudit superviseur d'organismes LEA (30) ; et
- dans le cas où un mandat électronique n'est pas activé sur l'utilisateur cible :
- émettre une notification (43) à destination du superviseur d'organismes LEA (30) ;
- octroyer (41) provisoirement ladite demande ;
- vérifier si un mandat électronique a été saisi par le superviseur d'organismes LEA (30) à l'égard de l'utilisateur cible suite à ladite notification ;
- octroyer (38, 55, 65, 76) ladite demande au cas où le mandat électronique a été saisi par le superviseur d'organismes LEA (30) à l'égard de l'utilisateur cible ;
- refuser (39, 56, 66, 77) ladite demande dans le cas où un mandat électronique n'a pas été saisi par le superviseur d'organismes LEA (30) à l'égard de l'utilisateur cible.

2. Procédé selon la revendication 1, comprenant en outre l'étape consistant à octroyer (35, 52, 62, 73, 81) ladite demande dans le cas où le mandat électronique est activé sur l'utilisateur cible.

3. Procédé selon la revendication 1 ou 2, comprenant en outre les étapes ci-dessous consistant à :
- détecter des informations d'identification supplémentaires connexes audit utilisateur cible, lesdites informations d'identification supplémentaires correspondant à au moins l'un des éléments parmi : un identifiant d'une partie appelée, incluant des numéros de téléphone et une adresse de courriel ; et un identifiant d'un tiers, incluant des numéros de téléphone et une adresse de courriel ;
- permettre la rétention ou l'interception de données (34, 72) connectées auxdites informations d'identification supplémentaires.

4. Procédé selon la revendication 1 ou 2, dans lequel le mandat électronique comprend des informations d'autorisation définissant un champ d'application de demandes de rétention ou d'interception de données connexes à l'utilisateur cible.

5. Procédé selon la revendication 4, **caractérisé en ce que** lesdites données d'autorisation comportent une ou plusieurs autorisations parmi : l'autorisation d'intercepter l'utilisateur cible ; l'autorisation d'étendre l'interception à d'autres identités connues ; l'autorisation d'étendre provisoirement l'interception à d'autres identités inconnues ; l'autorisation d'accéder à des données retenues de l'utilisateur cible ; l'autorisation d'étendre l'accès à des données retenues à d'autres identités connues ; l'autorisation d'étendre provisoirement l'accès à des données retenues à d'autres identités inconnues ; et des intervalles de temps pour l'interception de l'accès à des données retenues.

6. Procédé selon la revendication 5, **caractérisé en ce que** le mandat électronique est codé dans un format standard.

7. Procédé selon la revendication 6, **caractérisé en ce que** ledit format standard est dans l'un des formats sélectionnés parmi XML, BER et CSV.
